(19) Europäisches Patentamt
European Patent Office
Office européen des brevets

(11) **EP 2 505 995 B1**

(12) **EUROPEAN PATENT SPECIFICATION**

(45) Date of publication and mention
of the grant of the patent:
**04.11.2015 Bulletin 2015/45**

(21) Application number: **10833645.4**

(22) Date of filing: **24.11.2010**

(51) Int Cl.:
***G01N 22/00*** *(2006.01)*      ***G01S 13/88*** *(2006.01)*

(86) International application number:
**PCT/RU2010/000724**

(87) International publication number:
**WO 2011/065868 (03.06.2011 Gazette 2011/22)**

(54) **METHOD FOR DETERMINING THE DIELECTRIC PERMITTIVITY OF A DIELECTRIC OBJECT**

VERFAHREN ZUR BESTIMMUNG DER DIELEKTRISCHEN PERMITTIVITÄT EINES DIELEKTRISCHEN OBJEKTS

PROCÉDÉ POUR DÉTERMINER LA PERMITTIVITÉ DIÉLECTRIQUE D UN OBJET DIÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.11.2009 RU 2009145423**

(43) Date of publication of application:
**03.10.2012 Bulletin 2012/40**

(73) Proprietor: **APSTEC Systems Ltd**
**IKL 1200 Iklin (MT)**

(72) Inventors:
• **KUZNETSOV, Andrey Viktorovich**
**St. Petersburg 194223 (RU)**

• **GORSHKOV, Igor Yurievich**
**St. Petersburg 199178 (RU)**
• **AVERYANOV, Valery Petrovich**
**St. Petersburg 195221 (RU)**

(74) Representative: **Best, Michael et al**
**Lederer & Keller**
**Patentanwälte Partnerschaft mbB**
**Unsöldstrasse 2**
**80538 München (DE)**

(56) References cited:
**GB-A- 2 458 764          JP-A- 9 243 577**
**RU-C1- 2 039 352          US-A- 6 057 761**
**US-A1- 2003 178 034      US-A1- 2005 232 459**
**US-B1- 6 950 054          US-B1- 6 967 612**
**US-B1- 7 040 168**

**Description**

FIELD OF INVENTION

The invention relates to the field of electrical engineering and, more specifically, to the remote measurement of the dielectric permittivity of dielectrics.

BACKGROUND OF THE INVENTION

One of known methods for determining the dielectric permittivity of a material consists of irradiating a sample with an electromagnetic wave using a double-arm emitter, changing difference between the signal's phases in the arms of the emitter and measuring amplitude of the wave transmitted at an angle and determining the dielectric permittivity. By changing the difference between the signal's phases in the arms of the emitter, the dependence of the amplitude of the transmitted wave on the length of the arm is eliminated. The dielectric permittivity is determined by the following formula:

$$\varepsilon = \frac{\lambda_0^2}{Sin^2 Q} \bullet \left( \frac{1}{\Delta} - \frac{1}{\lambda_b} \right)^2,$$

where $\lambda_o$ - free-space wavelength; $\lambda_b$ - wavelength in the double-armed emitter; $\Delta$ - period of amplitude "zero" for the transmitted wave, and angle $\Theta$ is chosen according to the relationship

$$\left( \frac{d_k}{\lambda_b} - 1 \right) < \frac{d_k}{\lambda_0} \sqrt{\varepsilon} Sin\theta < \left( \frac{d_k}{\lambda_b} + 1 \right),$$

where $d_k$ - maximum size of the emitter's arm, see USSR Patent No. SU 1800333 A1.

The disadvantage of this method is that it requires a contact between the emitter and the object, the dielectric permittivity of which is to be determined. Moreover, this sample needs to have a flat surface to ensure a contact with the emitter. These requirements do not allow using this method for remote determination of the dielectric permittivity of objects.

Another known method to determine the dielectric permittivity of a dielectric object employs irradiating the dielectric object with coherent microwave radiation at N frequencies. The irradiation is carried out against the background of reflectors, whereby boundaries between the object's layers, or a boundary between the dielectric object and air, or a physical body, on which the tested dielectric object is placed, serve as the reflectors. The signal reflected from the dielectric object and the reflector is registered. The detected signals are converted in the time domain. Peak temporal components in the temporal spectrum are determined and the times of the determined peak temporal components are measured. These data are used to determine the dielectric permittivity and the thickness of the layers. Probing and receiving is carried out in a sector of angles. Dielectric permittivity and thickness of layers are then determined from the formulae:

$$\varepsilon_i = \frac{\sqrt{\varepsilon_1} Sin\theta_{nad}^{(i)} * c * \left( t_i - \frac{2}{c} \sum_{p=1}^{i-1} \frac{\sqrt{\varepsilon_p} \Delta l_p}{\sqrt{1 - \varepsilon_1/\varepsilon_p * Sin^2 \theta_{nad}^{(i)}}} \right)}{2 * \left( \frac{d}{2} - \sum_{p=1}^{i-1} \Delta l_p * \frac{\varepsilon_1 Sin\theta_{nad}^{(i)}}{\sqrt{\varepsilon_p - \varepsilon_1 Sin^2 \theta_{nad}^{(i)}}} \right)};$$

$$\Delta l_i = \left( t_i - \frac{2}{c} \sum_{p=1}^{i-1} \frac{\sqrt{\varepsilon_{p_i}} * \Delta l_p}{\sqrt{1 - \varepsilon_1/\varepsilon_p * Sin^2 \theta_{nad}^{(i)}}} \right) * \frac{c * \sqrt{1 - \frac{\varepsilon_1}{\varepsilon_i} Sin^2 \theta_{nad}^{(i)}}}{2\sqrt{\varepsilon_i}};$$

where i - the number of the layer; $\varepsilon_i$ and $\varepsilon_p$ - dielectric permittivity of layers i and p; $\varepsilon_1$ - the dielectric permittivity of the medium in which probing and receiving of signals is performed; $\Delta l_i$ - thickness of i-layer; $\Delta l = \dfrac{h_1 + h_2}{2}$ where $h_1$ and $h_2$ are heights between the border of the first and second layers to the points from which probing is performed and the signal receiving points respectively; $\theta_{na\partial l}^{(i)}$ is angle of received signal reflected from the border between layers i and i+1, c - speed of light; $t_i$ - frequency of peak i-constituent of the time spectrum which corresponds to the reflection of the signal from the border between layers i and i+1, and d - projection on the probe surface of the distance between the point of probing and the signal receiving point, see Russian Patent No. RU 2039352 C1.

The disadvantage of this method, which is taken as a prototype for the present invention, is the requirement of parallel arrangement of the layers of the dielectric object. If the object consists of a single layer, its sides should be parallel. Therefore this method can be used solely for custom-made objects with required features. Moreover, this method also requires that the angles of incidence and reflection of the microwave radiation towards the dielectric object are well-defined.

The aforementioned renders it impossible to use this method in practice for determining dielectric permittivity of a moving and hidden object with non-parallel layers or sides, particularly for covert detection of the presence of dielectric explosive compounds hidden on a human body. It is known that dielectric permittivity of the vast majority of such compounds lies between 2,9 - 3,1.

US6950054 is directed to a method for detecting objects concealed on a person using a handheld radar frequency scanner system, the method comprising directing a radar signal at a person; detecting a portion of the radar signal reflected by the person; and processing the portion of the radar signal detected by the radar receiver to determine whether the person is carrying a concealed object, by conducting a test in which a first characteristic of a first dielectric constant associated with the person is determined, and a second characteristic of a second dielectric constant associated with the concealed object is determined. The scanning operation consists of moving the antenna head part of the handheld device over the person being scanned, typically maintaining the distance of approximately 0-3 inches (0-7.6 cm) clearance. The testing/measurement requires a significant amount of time.

DETAILED DESCRIPTION

The purpose of the present invention is to provide a method for remotely determining the dielectric permittivity of a moving dielectric object of irregular shape.

The present invention provides a method for determining the dielectric permittivity of a dielectric object against the background of a reflector, *the method comprising:*

irradiating the dielectric object with coherent microwave radiation at N frequencies,
detecting the signal reflected from the dielectric object and the reflector,
coherent processing of the detected signal and receiving a three dimensional microwave image of the dielectric object and the reflector, wherein the microwave image corresponds to only one three dimensional surface formed with points corresponding to the maximal values of intensity of the reconstructed configuration of the scatterers of the dielectric object and the reflector;
additionally obtaining a video image of a region, where the dielectric object and the reflector are located by using two or more video cameras, synchronized with the microwave radiation source;
converting the obtained video image into digital form and constructing a three dimensional video image of said region;
converting the three dimensional video image and the microwave image into a general system of coordinates;
from the microwave image in the general system of coordinates determining the distance $Z_1$ between the microwave radiation source and a section of the microwave image of the reflector that is free of the dielectric object, and the distance $Z_2$ between the microwave radiation source and the section of the microwave image of the reflector in the section of the dielectric object;
on the basis of the video image determining in the general system of coordinates the distance $Z_3$ between the microwave radiation source and the video image of the dielectric object; *whereby*
the dielectric permittivity $\varepsilon$ of the dielectric object is determined from the relationship:

$$\varepsilon = \left( \frac{z_2 - z_3}{z_1 - z_3} \right)^2$$

.

The applicant is not aware of any technical solutions which are identical to the claimed subject matter. This suggests that the invention complies with the requirement of novelty.

Implementation of the distinguishing features of the invention results in new important features of the claimed subject matter. In particular the invention makes it possible to remotely determine the dielectric permittivity of a moving, irregularly-shaped dielectric object.

The applicant is not aware of any sources of information which would provide any knowledge about the relationship between the distinguishing features of the present invention and the achieved technical effect. New features of the claimed subject matter outlined above demonstrate, in applicant's opinion that the subject matter of the invention complies with the requirement of non-obviousness.

BRIEF DESCRIPTION OF FIGURES

In the following, the invention is explained by a detailed description of an example without any references to figures.

BEST MODE OF CARRYING OUT THE INVENTION

In order to demonstrate the method for determining the dielectric permittivity of a dielectric object against the background of a reflector, a test dummy was used to mimic the human body serving as the reflector. The dummy had a dielectric object (beeswax) attached to the body. The goal of the experiment was to determine the dielectric permittivity of the beeswax. The test dummy with the attached dielectric object was irradiated with coherent microwave radiation at 14 equidistant frequencies in the range of frequencies from 8 to 12 GHz. Irradiation was performed using a switched planar antenna array with hexagonal configuration of emitting elements, and consisting of 256 primary emitters. The reflected signal, in the form of two quadrature components, was received by two parallel receiving channels and detected by 12-digit analog-to-digital converters. The data from the output of the receiving channels corresponding to the electrical component of the detected scattered electromagnetic field were transferred to a computer, where a microwave image was formed using focusing method (coherent processing). The microwave image corresponded to only one three dimensional surface formed with points corresponding to the maximal values of intensity of the reconstructed configuration of the scatterers of the dielectric object and the reflector. Simultaneously with irradiation by microwave radiation, a video image of the dielectric object and the reflector was obtained using two digital spatially-separated video cameras SDU-415. Using this data, the three dimensional video image of the section with the dielectric object and the reflector was constructed. The microwave image and the three dimensional video image were converted into a general system of coordinates. In this particular case, the general system of coordinates was set by the antenna array plane and an axis perpendicular to it and intersecting the antenna at its center. The microwave image and the three dimensional video image were analyzed in the general system of coordinates. The value of $Z_1$ - the distance between the source of microwave radiation and the section of the microwave image of the reflector, free of the dielectric object was determined, and the distance $Z_2$ between the source of microwave radiation and the section of the microwave image of the reflector, where the dielectric object was located, was determined. Using the video image the distance $Z_3$ between the microwave radiation source and the video image of the dielectric object was determined. The dielectric permittivity of the object against the background of the reflector was determined from the relationship:

$$\varepsilon = \left( \frac{z_2 - z_3}{z_1 - z_3} \right)^2,$$

In our particular example, the distances were the following:

$$Z_1 = 122 \text{ cm}, \quad Z_2 = 128 \text{ cm}, \quad Z_3 = 112 \text{ cm},$$

and

$$\varepsilon = 2.56.$$

Based on the determined value of ε for the inspected object, one can conclude that this object does not belong to widely spread and currently used explosive compounds, such as TNT, hexogen, tetryl or a plastic explosive.
This method could also be used for other purposes, for example for determining the physical characteristics of dielectrics used in electrical industry.

INDUSTRIAL APPLICABILITY

For carrying out the invention known materials and equipment are used. Therefore, in applicant's opinion, the present invention complies with the requirement of industrial applicability.

**Claims**

1. A method for determining the dielectric permittivity of a dielectric object against the background of a reflector, *the method comprising:*

   irradiating the dielectric object with coherent microwave radiation at N frequencies,
   detecting the signal reflected from the dielectric object and the reflector, *whereby the method further comprises:*

   coherent processing of the detected signal and receiving three dimensional microwave image of the dielectric object and the reflector, wherein the microwave image corresponds to only one three dimensional surface formed with points corresponding to the maximal values of intensity of the reconstructed configuration of the scatterers of the dielectric object and the reflector;
   additionally obtaining a video image of a region, where the dielectric object and the reflector are located by using two or more video cameras, synchronized with the microwave radiation source; converting the obtained video image into digital form a constructing a tree-dimensional video image of said region;
   converting the three dimensional video image and the microwave image into a general system of coordinates; from the microwave image in the general system of coordinates determining the distance $Z_1$ between the microwave radiation source and a section of the microwave image of the reflector that is free of the dielectric object, and the distance $Z_2$ between the microwave radiation source and the section of the microwave image of the reflector in the region of the dielectric object;
   on the basis of the video image determining in the general system of coordinates the distance $Z_3$ between the microwave radiation source and the video image of the dielectric object; *whereby*
   the dielectric permittivity ε of the dielectric object is determined from the relationship:

   $$\varepsilon = \left( \frac{z_2 - z_3}{z_1 - z_3} \right)^2 .$$

**Patentansprüche**

1. Verfahren zur Bestimmung der dielektrischen Permittivität eines dielektrischen Objekts vor dem Hintergrund eines Reflektors, wobei das Verfahren:

   das Bestrahlen des dielektrischen Objekts mit kohärenter Mikrowellenstrahlung bei N Frequenzen,
   das Detektieren des Signals, das von dem dielektrischen Objekt und dem Reflektor reflektiert wird, umfasst, wobei das Verfahren ferner:

   das kohärente Verarbeiten des detektierten Signals und das Empfangen eines dreidimensionalen Mikrowellenbildes des dielektrischen Objekts und des Reflektors, wobei das Mikrowellenbild nur einer dreidimensionalen Oberfläche entspricht, die mit Punkten gebildet wird, die den maximalen Werten der Intensität der rekonstruierten Konfiguration der Streuungen des dielektrischen Objekts und des Reflektors entsprechen;
   außerdem das Erhalten eines Videobildes einer Region, wo das dielektrische Objekt und der Reflektor unter Verwendung von zwei oder mehr Videokameras lokalisiert sind, synchronisiert mit der Mikrowellenstrahlungsquelle;

das Umwandeln des erhaltenen Videobildes in eine digitale Form und das Konstruieren eines dreidimensionalen Videobildes der Region;

das Umwandeln des dreidimensionalen Videobildes und des Mikrowellenbildes in ein allgemeines Koordinatensystem;

das Bestimmen, aus dem Mikrowellenbild in dem allgemeinen Koordinatensystem, des Abstandes $Z_1$ zwischen der Mikrowellenstrahlungsquelle und einem Abschnitt des Mikrowellenbildes des Reflektors, das frei von dem dielektrischen Objekt ist, und des Abstandes $Z_2$ zwischen der Mikrowellenstrahlungsquelle und dem Abschnitt des Mikrowellenbildes des Reflektors in der Region des dielektrischen Objekts;

das Bestimmen, auf der Basis des Videobildes, im allgemeinen Koordinatensystem des Abstandes $Z_3$ zwischen der Mikrowellenstrahlungsquelle und dem Videobild des dielektrischen Objekts umfasst; wobei die dielektrische Permittivität $\varepsilon$ des dielektrischen Objekts aus der Beziehung:

$$\varepsilon = \left(\frac{z_2 - z_3}{z_1 - z_3}\right)^2$$

bestimmt wird.

## Revendications

1. Procédé pour déterminer la permittivité diélectrique d'un objet diélectrique sur le fond d'un réflecteur, le procédé comprenant les étapes consistant à :

irradier l'objet diélectrique avec un rayonnement hyperfréquence cohérent sur N fréquences,
détecter le signal réfléchi par l'objet diélectrique et le réflecteur, de sorte que le procédé comprend en outre les étapes consistant à :

effectuer un traitement cohérent du signal détecté et recevoir une image hyperfréquence tridimensionnelle de l'objet diélectrique et du réflecteur, dans lequel l'image hyperfréquence correspond à une seule surface tridimensionnelle formée avec des points correspondant aux valeurs maximales d'intensité de la configuration reconstruite des diffuseurs de l'objet diélectrique et du réflecteur ;
obtenir en plus une image vidéo d'une région, où l'objet diélectrique et le réflecteur sont localisés au moyen de deux caméras vidéo ou plus, synchronisées avec la source de rayonnement hyperfréquence ;
convertir l'image vidéo obtenue sous forme numérique et construire une image vidéo tridimensionnelle de ladite région ;
convertir l'image vidéo tridimensionnelle et l'image hyperfréquence en un système de coordonnées général ;
à partir de l'image hyperfréquence dans le système de coordonnées général, déterminer la distance $Z_1$ entre la source de rayonnement hyperfréquence et une section de l'image hyperfréquence du réflecteur qui est dépourvue de l'objet diélectrique, et la distance $Z_2$ entre la source de rayonnement hyperfréquence et la section de l'image hyperfréquence du réflecteur dans la région de l'objet diélectrique ;
sur la base de l'image vidéo, déterminer dans le système de coordonnées général la distance $Z_3$ entre la source de rayonnement hyperfréquence et l'image vidéo de l'objet diélectrique ; de sorte que
la permittivité diélectrique $\varepsilon$ de l'objet diélectrique est déterminée à partir de la relation :

$$\varepsilon = \left(\frac{z_2 - z_3}{z_1 - z_3}\right)^2$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 1800333 A1
- RU 2039352 C1
- US 6950054 B